# EUROPEAN PATENT SPECIFICATION

(11) **EP 2 003 826 B1**
(45) Date of publication and mention of the grant of the patent: **25.08.2010**
(21) Application number: 07721126.6
(22) Date of filing: 14.05.2007
(51) Int. Cl.: H04W 36/00

(54) **REALIZING FAST HANDOVER**
BEREITSTELLUNG VON SCHNELLEM WEITERREICHEN
RÉALISATION D'UN TRANSFERT RAPIDE

(30) Priority: 24.06.2006 CN 200610061345
(43) Date of publication of application: 17.12.2008
(73) Proprietor: Huawei Technologies Co., Ltd., Longgang District, Shenzhen Guangdong 518129 (CN)
(72) Inventor: CHEN, Hongfei, Guangdong 518129 (CN); XIA, Zhongqi, Guangdong 518129 (CN)
(74) Representative: Körber, Martin Hans
(86) International application number: PCT/CN2007/001553
(87) International publication number: WO 2008/000133

(56) References cited:
- WO-A-2007/131404
- WO-A1-2005/057960
- CN-A- 1 514 657
- CN-A- 1 705 285
- JP-A- 2006 024 982
- US-A1- 2003 225 892
- US-A1- 2004 085 957
- KOODLI R ET AL: "Fast Handovers for Mobile IPv6; rfc4068.txt" IETF STANDARD, INTERNET ENGINEERING TASK FORCE, IETF, CH, 1 July 2005 (2005-07-01), XP015041931 ISSN: 0000-0003
- KOODLI R ET AL: "FAST HANDOVERS AND CONTEXT TRANSFERS IN MOBILE NETWORKS" COMPUTER COMMUNICATION REVIEW, ACM, NEW YORK, NY, US, vol. 31, no. 5, 1 October 2001 (2001-10-01), pages 37-47, XP001115324 ISSN: 0146-4833
- XIAOMING WANG ET AL: "A framework of enhanced local mobility routing" VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US, vol. 3, 6 October 2003 (2003-10-06), pages 2030-2034, XP010702686 ISBN: 978-0-7803-7954-1
- LIU Y. ET AL.: 'Handover mechanism with low delay and MIPV6 for WLAN' 31 July 2005,

## Description

### FIELD

The present disclosure relates to the mobile communication field, and in particular, to a method, system and apparatus for implementing fast handover in mobile IP Version 6 (IPv6).

### BACKGROUND

With development of network technologies and emergence of miscellaneous movable terminals such as notebook computer, palm computer, mobile phone, vehicle-mounted device, mobile computer is now prevalent. More and more users use various terminals to access the Internet anywhere through a public mobile radio network. In order to meet the requirements of mobile services, the mobile IP technology is introduced onto the network layer. The basic principles of the mobile IP technology are: a Mobile Node (MN) can always use the initial IP address to perform IP communication in the moving process, thus ensuring the upper-layer applications over the IP network layer to be non-interrupted and routable during motion.

With expansion of the network scale, the IPv6 technology is taking the place of the existing IPv4 technology by virtue of the merits such as huge address space. The IPv6-based mobile IP (namely, mobile IPv6) technology is in the spotlight of the mobile IP field and applied more and more widely now by virtue of its technical advantages and improvement of the mobile IPv4 technology.

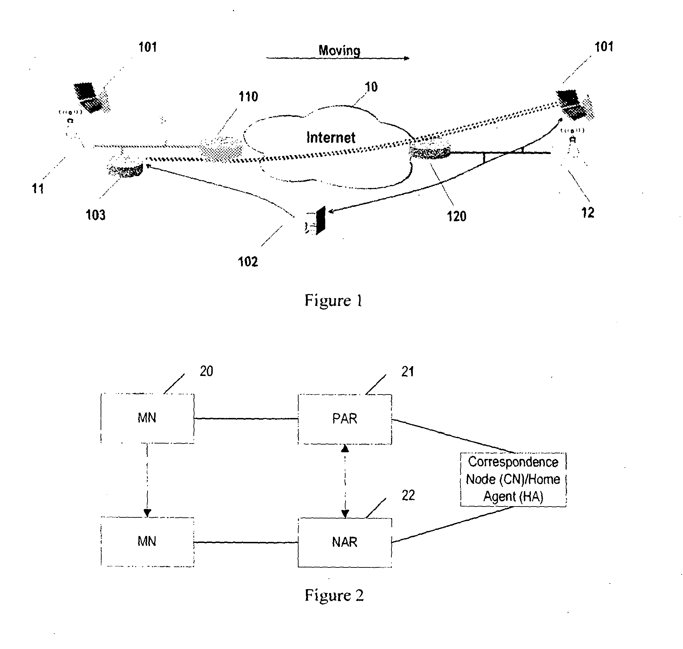

Figure 1 is a topology view of the mobile IPv6, in which the home network 11 is connected with the Internet 10 through a home gateway 110; and the foreign network 12 is connected with the Internet 10 through a foreign gateway 120. A home network is the default network of a node, and its network prefix is the same as that of home IP address of the node. A foreign network is a network other than the home network, and its network prefix is different from that of the home IP address of the node.

An MN 101 is a node that can maintain the underway communication while moving from one network to another on the Internet. One can communicate with an MN only if knowing the home address of the MN. A Correspondence Node (CN) 102 is a node that is communicating with the MN 101 and is of the equivalent standing. The CN may be mobile or fixed. A Home Agent (HA) 103 is a router that has a port connected with the home network of the MN. When an MN moves to a foreign network, it intercepts the information packets sent to the home address of the MN, forward them to the MN through a tunnel mechanism, and handle and maintain the current location information of the MN.

A Care-of Address (CoA) is a relevant IP address obtained when an MN moves to a foreign network. One MN may have multiple CoA addresses concurrently.

The working process of a mobile IPv6 is elaborated hereinafter.

Step A: When an MN is connected to its home network, the MN works in the same way as other fixed nodes. An address is allocated to the MN on the home network, and is called "home address (HoA)". The HoA is permanently allocated to the MN, and is the same as the address of the fixed node. When the MN moves, its HoA does not change. The mobile IPv6 involves a global unicast HoA and a network-local HoA.

Step B: Through the neighbor discovery mechanism of the IPv6, the MN detects whether it has roamed to a foreign network. The foreign gateway of the IPv6 sends router advertisement messages periodically. The router advertisement messages include the prefix of the foreign network. After receiving the router advertisement message of the foreign gateway, the MN checks the message and finds that the prefix of the foreign network in the message is different from that of the home network, and hence regards the MN as having roamed to the foreign network.

Step C: If the MN finds that it has roamed to a foreign network, the MN obtains the relevant IP address on the foreign network, known as "CoA", through a stateful or stateless auto address configuration process on the basis of the received router advertisement information. In this case, the MN owns the HoA and the CoA concurrently.

Step D: The MN registers its CoA onto the HA through a "Binding Update" message. The MN can also notify its CN of the CoA through a "Binding Update" registration message. Before registration, a Return Routability detection process needs to be performed between the MN and the CN. Namely, the MN sends a Home Init Test message and a Care-of Init Test message to the CN. The CN handles such messages and returns a Home Test message and a Care-of Test message to the MN.

Step E: Depending on the registration object performed through the "Binding Update" message, a data packet can be transferred in two modes.

The first mode is the triangle routing mode.

If the CN does not know the CoA of the MN, the CN sends the data packets to the home network of the MN according to the HoA of the MN. Afterward, the HA intercepts the data packets, and forwards the data packets to the MN through a tunnel mechanism according to the current CoA of the MN.

The messages sent by the MN to the CN are also sent to the HA through a reversed tunnel, and then the HA forwards the messages to the CN.

In this mode, the packets between the CN and the MN need to be forwarded by the HA, so this mode is called "triangle mode".

The second mode is the Route optimization mode.

If the CN knows the CoA of the MN through a "Binding Update" message, the CN sends the data packets to the MN directly by using the route header of the IPv6. The first destination address of the data packets is the CoA and the second destination address is the HoA. Therefore, the data packets are directly sent to the MN in the foreign network, without being forwarded by the HA.

In the reversed direction, the source address of the data packet sent by the MN to the CN is the CoA, and the HoA is stored in the destination extension header of the data packet. In this way, a data packet can be sent to the CN directly, without being sent to the HA through a reversed tunnel.

This mode is called "route optimization mode" as against the "triangle route" mode.

Because the handover of the MN of the mobile IPv6 between networks leads to service interruption, the related art provides a fast handover method. Referring to the network architecture shown in Figure 2, this method introduces the following four new concepts:
PAR: Previous Access Router, the access router of the network before moving;
NAR: New Access Router, the access router of the network after moving;
PCoA: Previous Care-of Address, the CoA of the network before moving;
NCoA: New Care-of Address, the CoA of the network after moving.

According to this fast handover method, before the "Binding Update", the MN 20 obtains the information about the adjacent network beforehand, and generates the IP address of the adjacent network. Once an action of moving to the adjacent network occurs, a tunnel is created between a PAR 21 and an MN 20 before completion of the binding update to accomplish non-interruption of traffic.

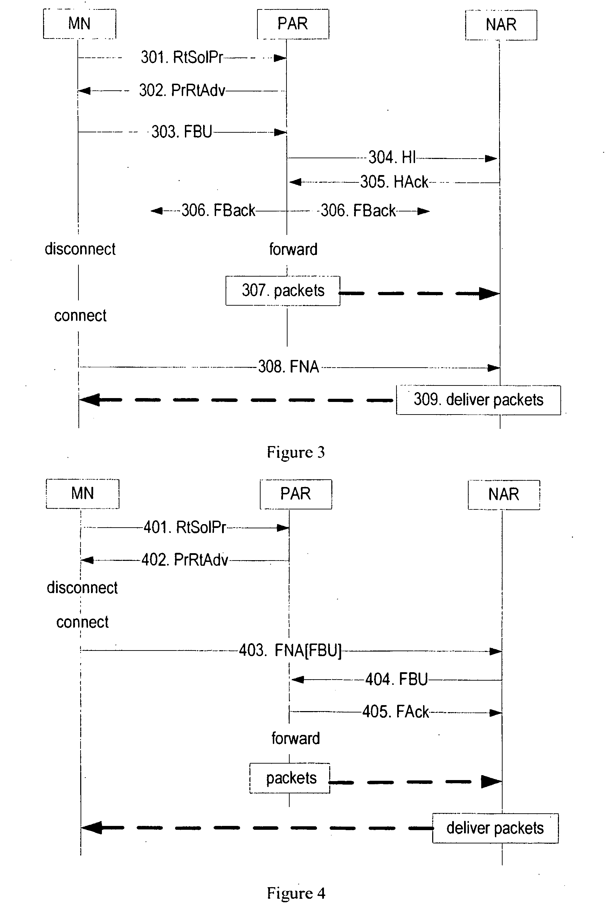

As shown in Figure 3, the fast handover process in the predictive mode includes the steps as described hereinafter.

Step 301: When the MN is located at the network border between the PAR and the NAR, the MN discovers a new AP signal and an AP ID information. In this case, the MN can send a Router Solicitation for Proxy Advertisement (RtSolPr) message to the PAR, with the newly discovered AP ID information carried in the message, in order to request the router information correlated to the AP ID.

Step 302: The PAR replies with a Proxy Router Advertisement (PrRtAdv) message, with the message carrying the NAR information related to the newly discovered AP ID. The NAR information includes the layer-2 (L2) link address of the NAR, the IP address of the NAR, and the network prefix of the NAR.

Step 303: After the MN receives the PrRtAdv message, the MN generates a correlated NCoA according to the information in the message: if the PrRtAdv message contains the recommended address, the MN uses the address as NCoA; if the PrRtAdv message contains no recommended address, the MN may generate its own NCoA through stateless auto configuration.

When a new AP signal is increasingly stronger, the MN sends a Fast Binding Update (FBU) message to the PAR, with the NCoA of the MN carried in the message.

Step 304: After receiving an FBU message, the PAR sends a Handover Initiation (HI) message to the NAR, with the message carrying the PCoA of the MN, the link-layer address of the MN, and the NCoA of the MN.

Step 305: After receiving a HI message, the NAR checks validity of the NCoA address in the HI message, generates a proxy for the NCoA, and sends a handover acknowledge (Hack) to the PAR.

Step 306: The PAR returns a Fast Binding Acknowledge (FBack) message to the MN and the NAR, stores the corresponding relationship between the NCoA and the PCoA, creates an NCoA tunnel from the PAR to the MN, changes the host route of the PCoA, and changes the next hop of the host route to the tunnel interface.

Step 307: Now a tunnel is created between the PAR and the NCoA of the MN. The PAR sends the buffered message addressed to the PCoA and the newly received message addressed to the PCoA out of this tunnel.

Step 308: After the MN is disconnected from the PAR and handed over to the NAR, the MN sends a Fast Neighbor Advertisement (FNA) message to the NAR. Before completion of binding update, if the NCoA is used as a source IP address, the CN mistakenly regards the message as illegal, and the PCoA is illegal in the NAR network. Therefore, the following operations are performed according to the direction of the data packets.

The traffic sent by the MN to the CN is encapsulated on the MN for tunneling. The source IP address of the inner-layer IP header is PCoA, the destination address is a CN address; the source address of the out-layer IP header is NCoA, and the destination address is a PAR address. The message passes through the NAR and arrives at the PAR. The PAR recognizes the message as a tunnel message according to the mapping relationship between the source address NCoA and PCoA, removes the outer-layer IP header, and uses the inner-layer IP header to continue forwarding the message to the CN.

For the traffic sent by the CN to the MN, the source address of the IP header on the CN is a CN address, and the destination address is a PCoA address. When the message arrives at the PAR, the PAR performs tunnel encapsulation according to the mapping relationship between the NCoA and PCoA. The source address of the outer-layer IP header is a PAR address and the destination address is an NCoA address.

Step 309: After completion of the binding update of the MN, the MN and the PAR delete the tunnel; afterward, the MN uses an NCoA to communicate with the CN directly.

As shown in Figure 4, the fast handover process in the reactive mode includes the steps as described hereinafter.

Steps 401-402: The MN sends an RtSolPr message and receives a PrRtAdv message on the PAR link, and generates a new NCoA address. Afterward, the MN hands over to the NAR link promptly (before receiving the FBU). The detailed process is elaborated hereinafter.

Step 403: The MN sends a FNA message to the NAR, with the link-layer address of the MN carried in the message. The FNA message also contains an FBU message.

Step 404: After receiving the FNA message, the NAR creates a neighbor entry for the NCoA, and sends an FBU message to the PAR.

Step 405: After receiving the FBU, the PAR creates a mapping relationship between the PCoA and the NCoA, and creates a tunnel from the PAR to the NCoA. The packet arriving at the PAR and addressed to the MN is sent out of this tunnel interface. After completion of the foregoing operations, the PAR sends a FAck message to the NCoA address of the MN.

Now the fast handover signaling between the MN and the PAR and NAR is completed.

Therefore, in the related art, non-interruption of traffic before the MN finishes the binding update of the NCoA is ensured through the tunnel mode between the PAR and MN. However, the tunnel method brings the following problems:
(1) The quantity of MNs in a network is huge, and numerous MNs may hand over between the PAR and the NAR network at a time; because the tunnel forwarding process is much more complicated than the ordinary message forwarding process, the forwarding efficiency of the PAR is reduced drastically;
(2) Because the tunnel between the MN and the PAR is valid only after the MN moves to the NAR before the MN finishes the NCoA binding update, the tunnel life is very short. In a short time, the control module of the router sends a tunnel creation message and a tunnel cancellation message to the forwarding module. When a large quantity of MNs hand over between the PAR and the NAR at a time, a large number of tunnel creation messages and tunnel cancellation messages exist between the control module and the forwarding module of the router, which deteriorates the router performance;
(3) The MN needs to support tunnels, which increases the complexity of the terminal.

US 2004/0085957A1 discloses an improvement over the conventional fast handover/context transfer protocol, using advance traffic engineering techniques such as MPLS/DiffServ QoS with the fast handover/context transfer protocol.

KOODLIR ET AL "Fast Handovers for Mobile Ipv6; rfc4068.txt" (IETF Standard, Internet Engineering Task Force, IETF, CH, 1 July 2005) discloses Mobile IPv6 which enables a Mobile Node to maintain its connectivity to the Internet when moving from one Access Router to another, a process referred to as handover.

### SUMMARY

The present disclosure provides a fast handover method, a fast handover system, a router and another router according to respective independent claims 1, 10, 14 and 16.

According to the technical solution under the present disclosure, only one tunnel needs to be created, which increases the efficiency of the router greatly; the data service does not need to be forwarded through an NCoA in the handover process; therefore, for the MN, the NCoA does not need to be configured beforehand, and can be configured after the MN moves to the NAR, thus making the handover process smoother.

### BRIEF DESCRIPTION OF THE DRAWINGS

Figure 1 is a network topology view of a mobile IPv6 in the related art;

Figure 2 is an access network topology view of an MN in the related art;

Figure 3 is a flowchart of fast handover in the predictive mode in the related art;

Figure 4 is a flowchart of fast handover in the reactive mode in the related art;

Figure 5 is a flowchart of the fast handover method in the predictive mode according to an embodiment of present disclosure;

Figure 6 is a flowchart of the fast handover method in the reactive mode according to an embodiment of present disclosure;

Figure 7 is a schematic diagram of a fast handover system according to an embodiment of the disclosure; and

Figure 8 is a schematic diagram of a fast handover apparatus according to an embodiment of the disclosure.

### DETAILED DESCRIPTION

The technical solution of the present disclosure is hereinafter described in detail with reference to the embodiments and accompanying drawings.

In an embodiment of the present disclosure, a tunnel is created between the PAR and the NAR for the purpose of transferring transient traffic of the MN during the handover.

For example, the following tunnel is created:
Tunnel static_par_nar /*create a new static tunnel, named static_par_nar*/
Source ipaddress par /*the source address of the tunnel is par*/
Destination ipaddress nar /*the destination address of the tunnel is nar*/
exit

The tunnel always exists, and does not need to be frequently created or deleted. The tunnel can be based on various technologies, for example, IP tunnel, IP Security Protocol (IPSEC) tunnel, and Multi Protocol Label Switching (MPLS) tunnel. All MNs that move from a specific PAR to a specific NAR use the same tunnel between the PAR and the NAR for transferring traffic, regardless of the quantity of the MNs. The source of the tunnel on the PAR is a PAR address, the destination address is an NAR address; the source of the tunnel on the NAR is an NAR address, and the destination address is a PAR address.

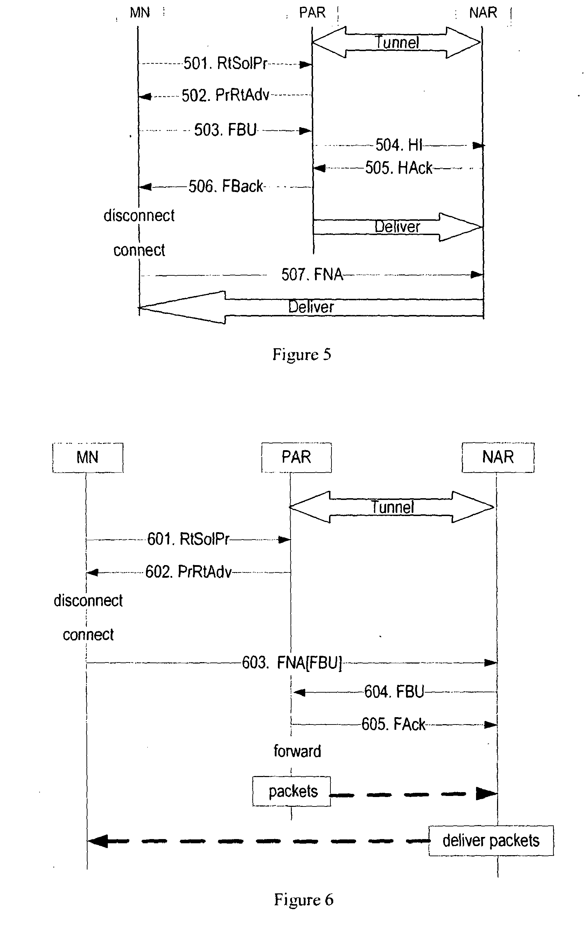

As shown in Figure 5, after the tunnel is created, the fast handover method in the predictive mode under the present disclosure includes the steps as described hereinafter.

Step 501: When the MN is located at a PAR network, the MN sends a Router Solicitation for Proxy Advertisement (RtSolPr) message to the PAR to request for the information about the Access Point (AP) and the network; the RtSolPr message may be sent at the time of sending the Neighbor Discover (ND) message.

Step 502: The PAR replies with a Proxy Router Advertisement (PrRtAdv) message, the message carrying the NAR information related to the newly discovered AP. The NAR information includes the L2 link address of the NAR, the IP address of the NAR, and the network prefix of the NAR.

Step 503: After the MN receives the PrRtAdv message, the MN generates a correlated NCoA according to the NAR network prefix information in the message: if the PrRtAdv message contains the recommended address, the MN uses the address as NCoA; if the PrRtAdv message contains no recommended address, the MN may generate its own NCoA through stateless auto configuration. When a new AP signal is increasingly stronger, the MN sends a Fast Binding Update (FBU) message to the PAR, with the NCoA of the MN carried in the message.

In the embodiment of the present disclosure, when the MN needs to move and hand over, an FBU message may be sent to the PAR, with the current PCoA carried in the FBU message.

In the embodiment of the present disclosure, in order to speed up the reconfiguration of the IP layer, the FBU message may also carry the recommended NCoA of the MN.

Step 504: After receiving the FBU message from the MN, the PAR modifies the PCoA host route of the MN, and the egress interface of the route leads out of the tunnel created from the PAR to the NAR, as exemplified below:
Ip route pcoa interface static_par_nar /* the egress interface of the host route addressed to the PCoA is the tunnel interface*/

This message is notified to the NAR through a HI message. The HI message carries the PCoA of the MN, the link-layer address and the recommended NCoA of the MN. In the embodiment of the present disclosure, after the PAR receives an FBU message of the MN, the PAR changes the host route addressed to the current PCoA, and sends a HI message to the NAR at the same time, with the message carrying the L2 link address of the MN, the current PCoA and the recommended NCoA, in order to forward the traffic of the message addressed to the PCoA out of the tunnel created between the PAR and the NAR. When a message addressed to the PCoA arrives, the PAR buffers the message.

Step 505: After receiving a HI message, the NAR checks validity of the NCoA address in the HI message, generates a proxy for NCoA, and creates a proxy neighbor list for the NCoA of the MN. In the present disclosure , the NAR needs to perform the neighbor discovery and response functions on behalf of both NCoA and PCoA of the MN. Therefore, the NAR also needs to create a proxy neighbor list for the current PCoA of the MN. The interface of the PCoA neighbor list ingress should be identical to the interface of the NCoA neighbor list. In this way, the NAR can forward the message correctly according to the PCoA proxy neighbor list after receiving a message addressed to the PCoA.

After receiving a message addressed to the PCoA, the NAR searches the PCoA proxy neighbor list. If no neighbor entry of the PCoA is found, the NAR discards the message; if a neighbor entry of the PCoA is found, the NAR sends the message to the MN.

In order to ensure the message sent by the NAR to be received by the MN, the NAR may buffer the data packet after searching out the neighbor entry of the PCoA.

In the embodiment of the present disclosure, if the HI message sent by the PAR carries the recommended NCoA, the NAR returns a Hack message after receiving a HI message.

Step 506: The PAR returns an FBack message to the MN. If the HI message sent by the PAR carries no recommended NCoA, skip step 506.

Step 507: When an MN moves to a link of the NAR, the MN sends an FNA message which carries the current PCoA options of the MN, in order to notify the NAR that the MN has arrived at a new link. In this way, the data packets buffered by the NAR can be sent to the MN.

After receiving an FNA message sent by the MN, the NAR creates an actual neighbor list for the NCoA and the PCoA of the MN; and creates a host route for the PCoA, as exemplified below:
Interface wireless_interface1
Neighbour ncoa lla_of_mn
Neighbour_pcoa lla_of_mn
Exit
Ip route pcoa interface wireless_interface 1 host /* creating a host route for the pcoa, and the egress interface is an radio interface*/

After the MN moves to the link of the NAR and before the binding update is finished, the following operations are performed according to the direction of the data packet:
A. Data packet sent from the MN to the CN:
   the source address of the data packet is PCoA, the destination address is CN;
   after receiving the data packet sent by the MN to the CN, the NAR sends the data packet to the CN directly through normal routing, without being sent to the PAR through tunneling.
B. Data packet sent from the CN to the MN:
   the source address of the data packet is CN, the destination address is PCoA;
   after the data packet is sent by the CN and arrives at the PAR, the PAR encapsulates the data packet according to the configured tunnel, and sends the traffic to the NAR; and
   the NAR disassembles the data packet and sends it to the MN.

After completion of binding update, the MN notifies the PAR and the NAR of binding update completion, the PAR and the NAR delete the host route of the PCoA.

As shown in Figure 6, the fast handover method in the reactive mode under the present disclosure includes the steps as described hereinafter.

Steps 601-602: The MN sends an RtSolPr message and receives a PrRtAdv message on the PAR link, and generates an NCoA address. Afterward, the MN hands over to the NAR link promptly (before receiving the FBU). The detailed process is elaborated hereinafter.

Step 603: The MN sends an FNA message to the NAR, the link-layer address of the MN being carried in the message. The FNA message also contains an FBU message.

Step 604: After receiving the FNA message, the NAR creates a neighbor entry and the corresponding host route for the NCoA and the PCoA, and sends an FBU message to the PAR.

Step 605: After receiving the FBU, the PAR modifies the host route of the PCoA, and sends the service packet addressed to the PCoA out of the tunnel between the PAR and the NAR. After completion of the foregoing operations, the PAR sends a FAck message to the NCoA address of the MN.

The fast handover signaling between the MN and the PAR and NAR is completed.

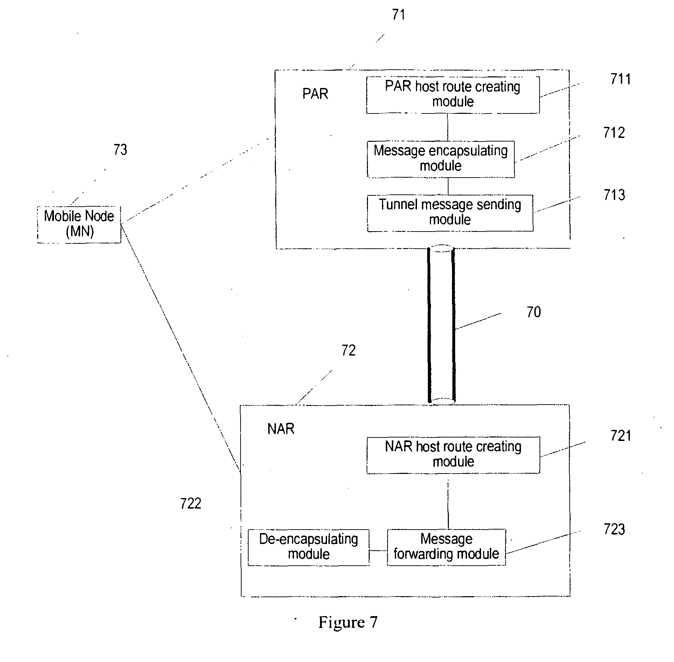

As shown in Figure 7, a fast handover system provided in an embodiment of the present disclosure includes a Previous Access Router (PAR) 71, a New Access Router (NAR) 72, and a fixed tunnel 70 between the PAR 71 and the NAR 72.

The PAR 71 includes a PAR host route creating module 711, a message encapsulating module 712, and a tunnel message sending module 713.
The PAR host route creating module 711 is adapted to create a PCoA host route at the PAR by using the tunnel interface as an egress interface, after the PAR 71 receives a fast binding update message from the MN 73.
The message encapsulating module 712 is adapted to encapsulate the message received by the PAR 71, where the message is sent by the CN to the MN 73.
The tunnel message sending module 713 is adapted to send the message encapsulated by the message encapsulating module 712 to the NAR 72 through the tunnel;

The NAR 72 includes an NAR host route creating module 721, a disassembling module 722, and a message forwarding module 723.
The NAR host route creating module 721 is adapted to create a PCoA host route at the NAR after the NAR 72 receives the Handover Init (HI) message sent by the PAR 71, with the ingress interface identical to the interface of NCoA proxy neighbor list. The PCoA host route does not take effect before the NAR 72 receives the Fast Neighbor Advertise (FNA) message sent by the MN 73, is designed only to buffer messages, and can be enabled and available for forwarding messages only after the NAR 72 receives the FNA message sent by the MN 73.
The de-encapsulated module 722 is adapted to de-encapsulate the message from the PAR 71 through the tunnel.
The actual message sending module 723 is adapted to send the message, which is de-encapsulated by the de-encapsulating module 722 and addressed to the PCoA, to the MN 73 according to the information in the actual proxy neighbor list of the NCoA; and send the message, which is received by the NAR 72 and sent by the MN 73 to the Correspondence Node (CN), to the CN according to the information in the proxy neighbor list of the NCoA.

Before handover of the MN 73, the MN 73 sends a binding update message to the PAR 71, with the PCoA carried in the message. After the PAR 71 receives the message, the PAR host route creating module 711 creates a PCoA host route of the MN according to the PCoA, with the egress interface of the PCoA host route identical to the interface of the tunnel. Meanwhile, the PAR 71 sends a HI message to the NAR 72, and notifies the NAR 72 of the PCoA.

After the NAR 72 receives the HI message, the NAR host route creating module 721 creates a PCoA host route of the MN, the ingress interface of the PCoA host route being identical to the interface of the NCoA proxy neighbor list.

In this way, when an MN 73 moves to NAR 72, the message can be transferred through the tunnel 70 before completion of the binding update, so as to communicate with the CN, as elaborated below:

After the NAR 72 receives a message sent by the MN 73 to its CN (the source address of the IP header of this message is the PCoA of the MN, and the destination address is the CN address), and the NAR 72 may send the message to the CN through a normal routing process according to its own NCoA host route.

After the PAR 71 receives the message sent by the CN to the MN 73 (the source address of the IP header of this message is the CN address, and the destination address is the PCoA address), the message encapsulating module 712 encapsulates the message according to the protocol adopted by the tunnel, and the tunnel message sending module 713 sends the encapsulated message to the NAR 72. After the NAR 72 receives the message, the disassembling module 722 disassembles the message, and buffers the data packet. After receiving the FNA message from the MN 73, the NAR 72 determines that the MN 73 has moved to the link of the NAR. Now, the message forwarding module 723 sends the buffered data packet to the MN 73 according to the information in the proxy neighbor list of the PCoA.

The embodiment of the present disclosure also involves a host route information deleting module, which is adapted to delete the PCoA host route information related to the MN 73 in the PAR 71 and the NAR 72 after the MN 73 finishes the binding update.

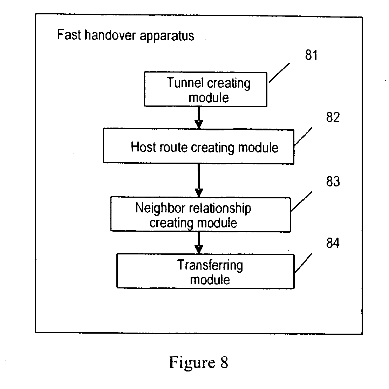

As shown in Figure 8, a fast handover apparatus provided in an embodiment of the present disclosure includes:
a tunnel creating module 81, adapted to create a fixed tunnel relationship between the PAR and the NAR;
a host route creating module 82, adapted to create a current host route for the PCoA of the MN at the PAR and the NAR, specifically:
   after the PAR receives the fast binding update message sent by the MN, create a PCoA host route at the PAR by using the tunnel interface as an egress interface;
   after the NAR receives the HI message sent by the PAR, create a PCoA host route at the NAR, with the ingress interface identical to the interface of the NCoA proxy neighbor list, wherein the PCoA host route does not take effect before the NAR receives the FNA message from the MN, is designed only to buffer messages, and can be enabled and available for forwarding messages only after the NAR receives the FNA message from the MN;
   a neighbor relationship creating module 83, adapted to create a proxy neighbor list at the NAR for the current PCoA of the MN;
   in the embodiment of the present disclosure, if the HI message received by the NAR from the PAR carries the NCoA, the NAR creates a proxy neighbor list for the NCoA of the MN; and
   a transferring module 84, adapted to transfer the data packet at the NAR to the MN according to the found proxy neighbor list.

A fast handover apparatus under the present disclosure may further include a FNA module (not illustrated in the figure herein), adapted to notify the NAR that the MN has arrived at a new link after the MN moves to a link of the NAR.

Step 507: When an MN sends an FNA, the FNA needs to carry the current PCoA options of the MN in order to notify the NAR that the MN has arrived at a new link. In this way, the data packets buffered by the NAR can be sent to the MN.

A fast handover apparatus under the present disclosure may further include a fast host information deleting module (not illustrated in the figure herein), adapted to delete the host route information of the PCoA in the PAR and NAR after the MN finishes the binding update.

Although the disclosure has been described through several preferred embodiments, the disclosure is not limited to such embodiments. It is apparent that those skilled in the art can make various modifications and variations to the disclosure without departing from the scope of the disclosure. The disclosure is intended to cover the variations and substitutions provided that they fall in the scope of protection defined by the following claims.

## Claims

1. A fast handover method comprising creating a fixed tunnel relationship between a Previous Access Router, PAR (71), and a New Access Router, NAR (72), the method further comprising :
creating a current host route of a Mobile Node, MN (73), at the PAR and NAR; and
encapsulating, by the PAR, NAR and MN, a message according to current host route information of an MN in an MN handover process, and transferring the message through a tunnel;
wherein the process of creating the current host route of the MN at the PAR and NAR comprises:
notifying, by the MN, the PAR of a Previous Care-of Address, PCoA;
modifying, by the PAR, a pre-stored direct host route of the MN according to the PCoA, setting an egress interface of the host route as a tunnel interface of a fixed tunnel created between the PAR and the NAR, and notifying the NAR of the PCoA; and
creating, by the NAR, the current host route of the MN according to the PCoA.

2. The fast handover method of claim 1, wherein:
the MN notifies the PAR of the PCoA through a binding update message; or
the PAR notifies the NAR of the PCoA through a Handover Initiation, HI, message.

3. The fast handover method of claim 2, wherein:
the binding update message and the HI message further comprise an New Care-of Address, NCoA;
the creating of the current host route of the MN according to the PCoA comprises:
creating, by the NAR, a proxy neighbor list for the NCoA of the MN and
a proxy neighbor list for the PCoA of the MN respectively, an ingress interface of the proxy neighbor list for the PCoA being identical to an interface of the proxy neighbor list for the NCoA.

4. The fast handover method of claim 3, wherein the encapsulating of messages according to the current host route information of the MN and transfer messages through the tunnel comprises:
sending, by the MN, a message to a Correspondence Node, CN, wherein a source address of an IP header of the message is the PCoA of the MN and a destination address is a CN address; and
sending, by the NAR, a message to the CN according to information in the NCoA proxy neighbor list after receiving the message sent by the MN to the CN.

5. The fast handover method of claim 3 or claim 4, wherein the encapsulating of messages according to the current host route information of the MN and transfer messages through the tunnel further comprises:
sending, by the CN, a message to the MN, wherein the source address of the IP header of the message is the CN address and the destination address is the PCoA of the MN;
sending, by the NAR, a message to the NAR through a tunnel after receiving the message sent by the CN to the MN; and
disassembling the received message, and sending the disassembled message to the MN.

6. The fast handover method of claim 5, wherein:
the NAR sends the disassembled message addressed to the PCoA to the MN according to the PCoA proxy neighbor list.

7. The fast handover method of claim 6, wherein the sending of the disassembled message addressed to the PCoA to the MN according to the PCoA proxy neighbor list, comprises:
obtaining, by the NAR, the address information of the MN by searching the PCoA proxy neighbor list, and buffering the data packet; and
sending the buffered data packet to the MN after determining that the MN has moved to the link of the NAR.

8. The fast handover method of claim 7, wherein: . ' after receiving the FNA message from the MN, the NAR determines that the MN has moved to the link of the NAR.

9. The fast handover method of claim 1, further comprising:
sending, by the MN, a binding update completion message to the PAR and NAR after the MN finishes the binding update; and
deleting, by the PAR and NAR, the stored PCoA host route of the MN after receiving the message.

10. A fast handover system, comprising: a Previous Access Router, PAR (71), a New Access Router, NAR (72), and a fixed tunnel created between the PAR and the NAR:
the PAR comprises:
a PAR host route creating module (711), adapted to create a PCoA host route of a mobile node, MN, at the PAR;
the NAR comprises:
an NAR host route creating module (721), adapted to create a PCoA host route at the NAR;
wherein the PAR, NAR and MN are adapted to encapsulate a message in an MN handover process and transfer the message through a tunnel; and to
create a PCoA host route at the PAR comprises:
the MN is adapted to notify the PAR of a Previous Care-of Address, PCoA;
the PAR is adapted to modify a pre-stored direct host route of the MN according to the PCoA, is adapted to set an egress interface of the host route as the tunnel interface of the fixed tunnel created between the PAR and the NAR, and is adapted to notify the NAR of the PCoA; and to
create a PCoA host route at the NAR comprises: the NAR host route creating module is adapted to create the current host route of the MN according to the PCoA.

11. The system of claim 10, wherein:
a tunnel interface is used as an egress interface for creating a PCoA host route at the PAR, after receiving a fast binding update message from a Mobile Node, MN (73);
after receiving a Handover Initiation, HI, message from the PAR, the NAR host route creating module is adapted to create a PCoA host route at the NAR with the ingress interface identical to the interface of an proxy neighbor list for the NCoA.

12. The system of claim 11, wherein:
the PAR further comprises:
a message encapsulating module, adapted to encapsulate a message sent by a Correspondence Node, CN, to the MN; and
a tunnel message sending module, adapted to send the message encapsulated by the message encapsulating module to the NAR through the tunnel;
the NAR further comprises:
a de-encapsulating module, adapted to de-encapsulating the message received from the PAR through the tunnel; and
a message forwarding module, adapted to send the message, which is de-encapsulated by the de-encapsulating module and addressed to the PCoA, to the MN according to the information in the actual proxy neighbor list of the NCoA; and send the message, which is received by the NAR and is sent by the MN to the CN, to the CN according to the information in the actual proxy neighbor list of the NCoA.

13. The system of claim 11, further comprising:
a host route information deleting module, adapted to delete the PCoA host route information related to the MN in the PAR and NAR after the MN finishes the binding update.

14. A router comprising:
a PAR, Previous Access Router, host route creating module (711), adapted to create a Previous Care-of-Address, PCoA, host route;
a message encapsulating module (712), adapted to encapsulate a message sent by a Correspondence Node, CN, to a Mobile Node, MN; and
a tunnel message sending module (713), adapted to send the message encapsulated by the message encapsulating module to a New Access Router, NAR (22), through the tunnel;
wherein to create the PCoA host route comprises:
the MN is adapted to notify the PAR of a Previous Care-of Address, PCoA;
the PAR is adapted to modify a pre-stored direct host route of the MN according to the PCoA, is adapted to set an egress interface of the host route as the tunnel interface of the fixed tunnel created between the PAR and the NAR, and is adapted to notify the NAR of the PCoA to create current host route of the MN according to the PCoA.

15. The router of claim 14, wherein:
the tunnel interface is used as an egress interface for creating a PCoA host route at the PAR, after receiving a fast binding update message from a Mobile Node, MN (73).

16. A router, comprising:
a New Access Router, NAR, host route creating module (721), adapted to create a Previous Care-of-Address, PCoA, host route;
a de-encapsulating module, (722) adapted to de-encapsulate a message received from the Previous Access Router, PAR, through a tunnel; and
a message forwarding module (723), adapted to send the message, which is de-encapsulated by the de-encapsulating module and addressed to the PCoA, to the Mobile Node, MN, according to information in an actual proxy neighbor list of a New Care-of-address, NCoA; and adapted to send a message, which is sent by the MN to the CN, to the CN according to the information in the actual proxy neighbor list of the NCoA;
wherein to create the PCoA host route comprises the NAR host route creating module is adapted to receive the PCoA from the PAR; and to
create a current host route of the MN according to the PCoA.

17. The router of claim 16, wherein:
after receiving a Handover Initiation, HI, message from the PAR (71), the NAR host route creating module is adapted to create a PCoA host route at the NAR with an ingress interface identical to an interface of an proxy neighbor list for the NCoA.

## Patentansprüche

1. Schnelles Handover-Verfahren, bei dem eine feste Tunnelbeziehung zwischen einem Previous Access Router PAR (71) und einem New Access Router NAR (72) erzeugt wird, wobei das Verfahren die folgenden Schritte umfasst:
Erzeugen einer aktuellen Hostroute eines Mobile Node MN (73) in dem PAR und NAR; und
Einkapseln einer Nachricht durch den PAR, NAR und MN gemäß aktuellen Hostrouteninformationen eines MN in einem MN-Handover-Prozess und Übermitteln der Nachricht durch einen Tunnel;
wobei der Prozess des Erzeugens der aktuellen Hostroute des MN in dem PAR und NAR Folgendes umfasst:
Benachrichtigen des PAR durch den MN über eine Previous Care-of Address PCoA; Modifizieren einer vorgespeicherten direkten Hostroute des MN durch den PAR gemäß der PCoA, Setzen einer Ausgangsschnittstelle der Hostroute als eine Tunnelschnittstelle eines zwischen dem PAR und dem NAR erzeugten festen Tunnels und Benachrichtigen des NAR über die PCoA; und
Erzeugen der aktuellen Hostroute des MN durch den NAR gemäß der PCoA.

2. Schnelles Handover-Verfahren nach Anspruch 1, wobei
der MN den PAR durch eine Bindungsaktualisierungsnachricht über die PCoA benachrichtigt; oder
der PAR den NAR durch eine Nachricht der Handover Initiation HI über die PCoA benachrichtigt.

3. Schnelles Handover-Verfahren nach Anspruch 2, wobei
die Bindungsaktualisierungsnachricht und die HI-Nachricht ferner eine New Care-of Address NCoA umfassen;
das Erzeugen der aktuellen Hostroute des MN gemäß der PCoA Folgendes umfasst:
Erzeugen einer Proxy-Nachbarnliste für die NCoA des MN bzw. einer Proxy-Nachbarnliste für die PCoA des MN durch den NAR, wobei eine Eingangsschnittstelle der Proxy-Nachbarnliste für die PCoA mit einer Schnittstelle der Proxy-Nachbarnliste für die NCoA identisch ist.

4. Schnelles Handover-Verfahren nach Anspruch 3, wobei das Einkapseln von Nachrichten gemäß den aktuellen Hostrouteninformationen des MN und die Übermittlung von Nachrichten durch den Tunnel Folgendes umfasst:
Senden einer Nachricht durch den MN zu einem Correspondence Node CN, wobei eine Quellenadresse eines IP-Headers der Nachricht die PCoA des MN ist und eine Zieladresse eine CN-Adresse ist; und
Senden einer Nachricht durch den NAR zu dem CN gemäß Informationen in der NCoA-Proxy-Nachbarnliste nach dem Empfang der durch den MN zu dem CN gesendeten Nachricht.

5. Schnelles Handover-Verfahren nach Anspruch 3 oder Anspruch 4, wobei das Einkapseln von Nachrichten gemäß den aktuellen Hostrouteninformationen des MN und die Übermittlung von Nachrichten durch den Tunnel ferner Folgendes umfasst:
Senden einer Nachricht durch den CN zu dem MN, wobei die Quellenadresse des IP-Headers der Nachricht die CN-Adresse ist und die Zieladresse die PCoA des MN ist;
Senden einer Nachricht durch den NAR zu dem NAR durch einen Tunnel nach dem Empfang der durch den CN zu dem MN gesendeten Nachricht; und
Auseinanderbauen der empfangenen Nachricht und Senden der auseinandergebauten Nachricht zu dem MN.

6. Schnelles Handover-Verfahren nach Anspruch 5, wobei
der NAR die an die PCoA adressierte auseinandergebaute Nachricht gemäß der PCoA-Proxy-Nachbarnliste zu dem MN sendet.

7. Schnelles Handover-Verfahren nach Anspruch 6, wobei das Senden der an die PCoA adressierten auseinandergebauten Nachricht zu dem MN gemäß der PCoA-Proxy-Nachbamliste Folgendes umfasst:
Erhalten der Adresseninformationen des MN durch den NAR durch Durchsuchen der PCoA-Proxy-Nachbarnliste und Puffern des Datenpakets; und
Senden des gepufferten Datenpakets zu dem MN nach der Bestimmung, dass sich der MN zu der Verbindung des NAR bewegt hat.

8. Schnelles Handover-Verfahren nach Anspruch 7, wobei
nach dem Empfang der FNA-Nachricht von dem MN der NAR bestimmt, dass sich der MN zu der Verbindung des NAR bewegt hat.

9. Schnelles Handover-Verfahren nach Anspruch 1, ferner mit dem folgenden Schritt:
Senden einer Bindungsaktualisierungs-Abschlussnachricht durch den MN zu dem PAR und NAR, nachdem der MN die Bindungsaktualisierung beendet; und
Löschen der gespeicherten PCoA-Hostroute des MN durch den PAR und NAR nach dem Empfang der Nachricht.

10. Schnelles Handover-System, umfassend: einen Previous Access Router PAR (71), einen New Access Router NAR (72) und einen zwischen dem PAR und dem NAR erzeugten festen Tunnel, wobei
der PAR Folgendes umfasst:
ein PAR-Hostrouten-Erzeugungsmodul (711), das dafür ausgelegt ist, eine PCoA-Hostroute eines Mobile Node MN in dem PAR zu erzeugen;
der NAR Folgendes umfasst:
ein NAR-Hostrouten-Erzeugungsmodul (721), das dafür ausgelegt ist, eine PCoA-Hostroute in dem NAR zu erzeugen;
wobei der PAR, NAR und MN dafür ausgelegt sind, eine Nachricht in einem MN-Handover-Prozess einzukapseln und die Nachricht durch einen Tunnel zu übermitteln; und
eine PCoA-Hostroute in dem PAR zu erzeugen, wobei
der MN dafür ausgelegt ist, den PAR über eine Previous Care-of Address PCoA zu benachrichtigen;
der PAR dafür ausgelegt ist, eine vorgespeicherte direkte Hostroute des MN gemäß der PCoA zu modifizieren, dafür ausgelegt ist, eine Ausgangsschnittstelle der Hostroute als die Tunnelschnittstelle des zwischen dem PAR und dem NAR erzeugten festen Tunnels zu setzen, und dafür ausgelegt ist, den NAR über die PCoA zu benachrichtigen; und
eine PCoA-Hostroute in dem NAR zu erzeugen, wobei das NAR-Hostrouten-Erzeugungsmodul dafür ausgelegt ist, die aktuelle Hostroute des MN gemäß der PCoA zu erzeugen.

11. System nach Anspruch 10, wobei
nach dem Empfang einer schnellen Bindungsaktualisierungsnachricht von einem Mobile Node MN (73) eine Tunnelschnittstelle als eine Ausgangsschnittstelle zum Erzeugen einer PCoA-Hostroute in dem PAR verwendet wird;
nach dem Empfang einer Nachricht der Handover Initiation HI von dem PAR das NAR-Hostrouten-Erzeugungsmodul dafür ausgelegt ist, eine PCoA-Hostroute in dem NAR zu erzeugen, wobei die Eingangsschnittstelle mit der Schnittstelle einer Proxy-Nachbarnliste für die NCoA identisch ist.

12. System nach Anspruch 11, wobei
der PAR ferner Folgendes umfasst:
ein Nachrichteneinkapselungsmodul, das dafür ausgelegt ist, eine durch einen Correspondence Node CN zu dem MN gesendete Nachricht einzukapseln; und
ein Tunnelnachrichten-Sendemodul, das dafür ausgelegt ist, die durch das Nachrichteneinkapselungsmodul eingekapselte Nachricht durch den Tunnel zu dem NAR zu senden;
der NAR ferner Folgendes umfasst:
ein Entkapselungsmodul, das dafür ausgelegt ist, die durch den Tunnel von dem PAR empfangene Nachricht zu entkapseln; und
ein Nachrichtenweiterleitungsmodul, das dafür ausgelegt ist, die Nachricht, die durch das Entkapselungsmodul entkapselt und an die PCoA adressiert ist, gemäß den Informationen in der tatsächlichen Proxy-Nachbarnliste der NCoA zu dem MN zu senden; und die Nachricht, die durch den NAR empfangen und durch den MN zu dem CN gesendet wird, gemäß den Informationen in der tatsächlichen Proxy-Nachbarnliste der NCoA zu dem CN zu senden.

13. System nach Anspruch 11, ferner umfassend:
ein Hostrouten-Informationslöschmodul, das dafür ausgelegt ist, die PCoA-Hostrouten-Informationen in Bezug auf den MN in dem PAR und NAR zu löschen, nachdem der MN die Bindungsaktualisierung beendet.

14. Router, umfassend:
ein Hostrouten-Erzeugungsmodul (711) des Previous Access Router PAR, das dafür ausgelegt ist, eine Hostroute der Previous Care-of Address PCoA zu erzeugen;
ein Nachrichteneinkapselungsmodul (712), das dafür ausgelegt ist, eine durch einen Correspondence Node CN zu einem Mobile Node MN gesendete Nachricht einzukapseln; und
ein Tunnelnachrichten-Sendemodul (713), das dafür ausgelegt ist, die durch das Nachrichteneinkapselungsmodul eingekapselte Nachricht durch den Tunnel zu einem New Access Router NAR (22) zu senden;
wobei zum Erzeugen der PCoA-Hostroute
der MN dafür ausgelegt ist, den PAR über eine Previous Care-of Address PCoA zu benachrichtigen;
der PAR dafür ausgelegt ist, eine vorgespeicherte direkte Hostroute des MN gemäß der PCoA zu modifizieren, dafür ausgelegt ist, eine Ausgangsschnittstelle der Hostroute als die Tunnelschnittstelle des zwischen dem PAR und dem NAR erzeugten festen Tunnels zu setzen, und dafür ausgelegt ist, den NAR über die PCoA zu benachrichtigen, um die aktuelle Hostroute des MN gemäß der PCoA zu erzeugen.

15. Router nach Anspruch 14, wobei
nach dem Empfang einer schnellen Bindungsaktualisierungsnachricht von einem Mobile Node MN (73) die Tunnelschnittstelle als eine Ausgangsschnittstelle zum Erzeugen einer PCoA-Hostroute in dem PAR verwendet wird.

16. Router, umfassend:
ein Hostrouten-Erzeugungsmodul (721) des New Access Router NAR, das dafür ausgelegt ist, eine Hostroute der Previous Care-of Address PCoA zu erzeugen;
ein Entkapselungsmodul (722), das dafür ausgelegt ist, eine durch einen Tunnel von dem Previous Access Router PAR empfangene Nachricht zu entkapseln; und
ein Nachrichtenweiterleitungsmodul (723), das dafür ausgelegt ist, die Nachricht, die durch das Entkapselungsmodul entkapselt und an die PCoA adressiert ist, gemäß Informationen in einer tatsächlichen Proxy-Nachbarnliste einer New Care-of Address NCoA zu dem Mobile Node MN zu senden; und dafür ausgelegt ist, eine Nachricht,
die durch den MN zu dem CN gesendet wird, gemäß den Informationen in der tatsächlichen Proxy-Nachbarnliste der NCoA zu dem CN zu senden;
wobei zum Erzeugen der PCoA-Hostroute das NAR-Hostrouten-Erzeugungsmodul dafür ausgelegt ist,
die PCoA von dem PAR zu empfangen; und
eine aktuelle Hostroute des MN gemäß der PCoA zu erzeugen.

17. Router nach Anspruch 16, wobei
nach dem Empfang einer Nachricht der Handover Initiation HI von dem PAR (71) das NAR-Hostrouten-Erzeugungsmodul dafür ausgelegt ist, eine PCoA-Hostroute in dem NAR zu erzeugen, wobei eine Eingangsschnittstelle mit einer Schnittstelle einer Proxy-Nachbarnliste für die NCoA identisch ist.

## Revendications

1. Procédé de transfert rapide de communication, comprenant la création d'une relation fixe de type tunnel entre un routeur d'accès précédent, PAR (71), et un nouveau routeur d'accès, NAR (72), le procédé comprenant en outre :
la création de la route hôte actuelle d'un noeud mobile, MN (73), au niveau du routeur PAR et du routeur NAR, et
l'encapsulation, par le routeur PAR, le routeur NAR et le noeud mobile MN, d'un message en fonction des informations de route hôte actuelle d'un noeud mobile MN dans un processus de transfert de communication de noeud mobile MN, et le transfert du message au travers d'un tunnel,
dans lequel le processus de création de la route hôte actuelle du noeud mobile MN au niveau du routeur PAR et du routeur NAR comprend :
la signalisation au routeur PAR, par le noeud mobile MN, d'une adresse temporaire précédente, PCoA,
la modification, par le routeur PAR, d'une route hôte directe, mémorisée à l'avance, du noeud mobile MN en fonction de l'adresse PCoA, l'établissement d'une interface de sortie de la route hôte en tant qu'interface de tunnel faisant partie d'un tunnel fixe créé entre le routeur PAR et le routeur NAR, et la signalisation de l'adresse PCoA au routeur NAR, et
la création, par le routeur NAR, de la route hôte actuelle du noeud mobile MN en fonction de l'adresse PCoA.

2. Procédé de transfert rapide de communication selon la revendication 1, dans lequel :
le noeud mobile MN signale au routeur PAR l'adresse PCoA par l'intermédiaire d'un message de mise à jour de liaison, ou
le routeur PAR signale au routeur NAR l'adresse PCoA par l'intermédiaire d'un message de lancement de transfert de communication, HI.

3. Procédé de transfert rapide de communication selon la revendication 2, dans lequel :
le message de mise à jour de liaison et le message HI comprennent en outre une nouvelle adresse temporaire, NCoA,
la création de la route hôte actuelle du noeud mobile MN en fonction de l'adresse PCoA comprend :
la création respective, par le routeur NAR, d'une liste de serveurs mandataires voisins pour l'adresse NCoA du noeud mobile MN et d'une liste de serveurs mandataires voisins pour l'adresse PCoA du noeud mobile MN, l'interface d'entrée de la liste de serveurs mandataires voisins pour l'adresse PCoA étant identique à l'interface de la liste de serveurs mandataires voisins pour l'adresse NCoA.

4. Procédé de transfert rapide de communication selon la revendication 3, dans lequel l'encapsulation de messages en fonction des informations de route hôte actuelle du noeud mobile MN et de messages de transfert au travers du tunnel comprend :
l'envoi, par le noeud mobile MN, d'un message à un noeud de correspondance, CN, dans lequel l'adresse source d'un en-tête au protocole IP du message est l'adresse PCoA du noeud mobile MN et l'adresse de destination est l'adresse du noeud CN, et
l'envoi, par le routeur NAR, d'un message au noeud CN en fonction des informations dans la liste de serveurs mandataires voisins pour l'adresse NCoA après la réception du message envoyé par le noeud mobile MN au noeud CN.

5. Procédé de transfert rapide de communication selon la revendication 3 ou la revendication 4, dans lequel l'encapsulation de messages en fonction des informations de route hôte actuelle du noeud mobile MN et de messages de transfert au travers du tunnel comprend en outre :
l'envoi, par le noeud CN, d'un message au noeud mobile MN, dans lequel l'adresse source de l'en-tête au protocole IP du message est l'adresse du noeud CN, et l'adresse de destination est l'adresse PCoA du noeud mobile MN,
l'envoi, par le routeur NAR, d'un message au routeur NAR au travers d'un tunnel après la réception du message envoyé par le noeud CN au noeud mobile MN, et
la suppression d'assemblage du message reçu et l'envoi du message désassemblé au noeud mobile MN.

6. Procédé de transfert rapide de communication selon la revendication 5, dans lequel :
le routeur NAR envoie le message désassemblé, adressé à l'adresse PCoA, au noeud mobile MN en fonction de la liste de serveurs mandataires voisins de l'adresse PCoA.

7. Procédé de transfert rapide de communication selon la revendication 6, dans lequel l'envoi du message désassemblé, adressé à l'adresse PCoA, au noeud mobile MN en fonction de la liste de serveurs mandataires voisins pour l'adresse PCoA comprend :
la récupération, par le routeur NAR, des informations d'adressage du noeud mobile MN en recherchant la liste de serveurs mandataires voisins pour l'adresse PCoA et en mettant en mémoire tampon le paquet de données, et
l'envoi du paquet de données en tampon au noeud mobile MN après la détermination de ce que le noeud mobile MN s'est déplacé vers la liaison du routeur NAR.

8. Procédé de transfert rapide de communication selon la revendication 7, dans lequel :
après avoir reçu le message d'annonce de voisin rapide, FNA, en provenance du noeud mobile MN, le routeur NAR détermine que le noeud mobile MN s'est déplacé vers la liaison du routeur NAR.

9. Procédé de transfert rapide de communication selon la revendication 1, comprenant en outre :
l'envoi, par le noeud mobile MN, d'un message d'achèvement de mise à jour de liaison au routeur PAR et au routeur NAR après que le noeud mobile MN a fini la mise à jour de liaison, et
la suppression, par le routeur PAR et le routeur NAR, de la route hôte mémorisée pour l'adresse PCoA du noeud mobile MN après la réception du message.

10. Système de transfert rapide de communication, comprenant : un routeur d'accès précédent, PAR (71), un nouveau routeur d'accès, NAR (72) et un tunnel fixe créé entre le routeur PAR et le routeur NAR :
le routeur PAR comprend :
un module de création de route hôte de routeur PAR (711), conçu pour créer la route hôte pour l'adresse PCoA d'un noeud mobile, MN, au niveau du routeur PAR,
le routeur NAR comprend :
un module de création de route hôte de routeur NAR (721), conçu pour créer la route hôte pour l'adresse PCoA au niveau du routeur NAR,
dans lequel le routeur PAR, le routeur NAR et le noeud mobile MN sont conçus pour encapsuler un message dans un processus de transfert de communication de noeud mobile MN et pour transférer le message au travers d'un tunnel, ainsi que pour créer une route hôte pour l'adresse PCoA au niveau du routeur PAR qui comprend:
le noeud mobile MN, qui est conçu pour signaler une adresse temporaire précédente, PCoA, au routeur PAR,
le routeur PAR, qui est conçu pour modifier une route hôte directe du noeud mobile MN mémorisée à l'avance en fonction de l'adresse PCoA, qui est conçu pour établir une interface de sortie de la route hôte en tant qu'interface de tunnel faisant partie du tunnel fixe créé entre le routeur PAR et le routeur NAR ainsi que pour signaler l'adresse PCoA au routeur NAR, ainsi que pour
créer une route hôte pour l'adresse PCoA au niveau du routeur NAR qui comprend : le module de création de route hôte du routeur NAR qui est conçu pour créer la route hôte actuelle du noeud mobile MN en fonction de l'adresse PCoA.

11. Système selon la revendication 10, dans lequel :
une interface de tunnel est utilisée comme interface de sortie pour créer une route hôte pour l'adresse PCoA au niveau du routeur PAR, après réception d'un message de mise à jour rapide de liaison provenant d'un noeud mobile, MN (73),
après réception d'un message de lancement de transfert de communication, HI, provenant du routeur PAR, le module de création de route hôte du routeur NAR est conçu pour créer une route hôte pour l'adresse PCoA au niveau du routeur NAR, l'interface d'entrée étant identique à l'interface d'une liste de serveurs mandataires voisins pour l'adresse NCoA.

12. Système selon la revendication 11, dans lequel :
le routeur PAR comprend en outre :
un module d'encapsulation de message, conçu pour encapsuler un message envoyé par un noeud de correspondance, CN, au noeud mobile MN, et
un module d'envoi de message en tunnel, conçu pour envoyer au routeur NAR le message encapsulé par le module d'encapsulation de message au travers du tunnel,
le routeur NAR comprend en outre :
un module de suppression d'encapsulation, conçu pour supprimer l'encapsulation du message reçu depuis le routeur PAR au travers du tunnel, et
un module de transfert de message, conçu pour envoyer le message, lequel n'est plus encapsulé grâce au module de suppression d'encapsulation et est adressé à l'adresse PCoA, au noeud mobile MN en fonction des informations se trouvant dans la liste de serveurs mandataires voisins en cours de l'adresse NCoA, et pour envoyer le message, qui est reçu par le routeur NAR, et qui est envoyé par le noeud mobile MN au noeud CN, vers le noeud CN en fonction des informations se trouvant dans la liste de serveurs mandataires voisins en cours de l'adresse NCoA.

13. Système selon la revendication 11, comprenant en outre :
un module de suppression d'informations de route hôte, conçu pour supprimer les informations de route hôte pour l'adresse PCoA se rapportant au noeud mobile MN dans le routeur PAR et dans le routeur NAR, après que le noeud mobile MN a fini la mise à jour de liaison.

14. Routeur, comprenant :
un module (711) de création de route hôte du routeur d'accès précédent, PAR, conçu pour créer une route hôte pour une adresse temporaire précédente, PCoA,
un module d'encapsulation de message (712), conçu pour encapsuler un message envoyé par un noeud de correspondance, CN, à un noeud mobile, MN, et
un module d'envoi de message en tunnel (713), conçu pour envoyer le message encapsulé par le module d'encapsulation de message à un nouveau routeur d'accès, NAR (22), au travers du tunnel,
dans lequel, le fait de créer une route hôte pour l'adresse PCoA comprend :
le noeud mobile MN, qui est conçu pour signaler une adresse temporaire précédente, PCoA, au routeur PAR,
le routeur PAR, qui est conçu pour modifier une route hôte directe du noeud mobile MN mémorisée à l'avance en fonction de l'adresse PCoA, qui est conçu pour établir une interface de sortie de la route hôte en tant qu'interface de tunnel faisant partie du tunnel fixe créé entre le routeur PAR et le routeur NAR, ainsi que pour signaler l'adresse PCoA au routeur NAR pour créer une route hôte actuelle du noeud mobile MN en fonction de l'adresse PCoA.

15. Routeur selon la revendication 14, dans lequel :
l'interface de tunnel est utilisée comme interface de sortie pour créer une route hôte pour l'adresse PCoA au niveau du routeur PAR après réception d'un message de mise à jour rapide de liaison provenant d'un noeud mobile, MN (73).

16. Routeur, comprenant:
un module (721) de création de route hôte d'un nouveau routeur d'accès, NAR, conçu pour créer une route hôte d'adresse temporaire précédente, PCoA,
un module de suppression d'encapsulation (722), conçu pour supprimer l'encapsulation d'un message reçu en provenance du précédent routeur d'accès, PAR, au travers d'un tunnel, et
un module de transfert de message (723), conçu pour envoyer le message qui n'est plus encapsulé grâce au module de suppression d'encapsulation et qui est adressé à l'adresse PCoA au noeud mobile, MN, en fonction des informations se trouvant dans une liste de serveurs mandataires voisins en cours d'une nouvelle adresse temporaire, NCoA, et qui est conçu pour envoyer un message, qui est envoyé par le noeud mobile MN au noeud CN, vers le noeud CN en fonction des informations se trouvant dans la liste de serveurs mandataires voisins en cours de l'adresse NCoA,
dans lequel, le fait de créer la route hôte pour l'adresse PCoA comprend le module de création de route hôte du routeur NAR qui est conçu pour recevoir l'adresse PCoA en provenance du routeur PAR, et pour créer une route hôte actuelle du noeud mobile MN en fonction de l'adresse PCoA.

17. Routeur selon la revendication 16, dans lequel :
après réception d'un message de lancement de transfert de communication, HI, provenant du routeur PAR (71), le module de création de route hôte de routeur NAR est conçu pour créer une route hôte pour l'adresse PCoA au niveau du routeur NAR comportant une interface d'entrée identique à une interface appartenant à une liste de serveurs mandataires voisins pour l'adresse NCoA.
